Europäisches Patentamt

**European Patent Office**

Office européen des brevets

(11) Veröffentlichungsnummer: **0 026 458**
**B1**

(12) **EUROPÄISCHE PATENTSCHRIFT**

(45) Veröffentlichungstag der Patentschrift:
22.02.84

(21) Anmeldenummer: 80105760.5

(22) Anmeldetag: 24.09.80

(51) Int. Cl.³: **H 04 L 9/02,** H 04 L 11/20,
H 04 K 1/00

(54) Verfahren zur Synchronisierung von Schlüsselgeräten, die im Rahmen eines Paketnetzes betrieben werden.

(30) Priorität: 27.09.79 DE 2939159

(43) Veröffentlichungstag der Anmeldung:
08.04.81 Patentblatt 81/14

(45) Bekanntmachung des Hinweises auf die Patenterteilung:
22.02.84 Patentblatt 84/8

(84) Benannte Vertragsstaaten:
BE GB NL

(56) Entgegenhaltungen:
DE - B - 2 557 214

NACHRICHTENTECHNISCHE ZEITSCHRIFT, 29.
Jahrgang, Heft 6, Juni 1976, Berlin; J. SPIELVOGEL
"Datenschutz durch Datenverschlüsselung", Seiten
439, 440
NACHRICHTENTECHNISCHE ZEITSCHRIFT, 30.
Jahrgang, Heft 6, Juni 1977, Berlin; H.P. BOELL
"Datenfernübertragungsnetze - Eine
Komponentendarstellung", Seiten 483-490
TELCOM REPORT, 1. Jahrgang, Heft 2, April 1978,
Siemens Aktiengesellschaft in Berlin und München; P.
BOCKER "Möglichkeiten und Grenzen von
Paketvermittlungsnetzen", Seiten 110-117

(73) Patentinhaber: SIEMENS AKTIENGESELLSCHAFT,
Berlin und München Wittelsbacherplatz 2,
D-8000 München 2 (DE)

(72) Erfinder: Rauch, Walter, Dipl.-Ing.,
Ammerseestrasse 155, D-8021 Neuried (DE)

### Verfahren zur Synchronisierung von Schlüsselgeräten, die im Rahmen eines Paketnetzes betrieben werden

Die Erfindung bezieht sich auf ein Verfahren zur Synchronisierung von Schlüsselgeräten, die im Rahmen eines Paketnetzes betrieben werden, wonach zum Aufbau einer Verbindung zwischen einer ersten und einer zweiten Datenendeinrichtung ein Verbindungsaufbaupaket von der ersten zur zweiten Datenendeinrichtung übertragen wird, wonach die zweite Datenendeinrichtung ein Verbindungsbestätigungspaket abgibt und wonach sich die Datenendeinrichtungen Datenpakete zusenden.

Gemäß einem internen Stand der Technik wird zur Synchronisierung von Schlüsselgeräten der Verbindungsaufbau durch die Übertragung eines Verbindungsaufbaupaketes und eines Verbindungsbestätigungspaketes eingeleitet. Eine der Datenendeinrichtungen gibt dann ein mit einem Kopf versehenes erstes Datenpaket ab. Das zugeordnete Schlüsselgerät gibt ein erstes Schlüsselgerätepaket ab, bestehend aus dem Kopf, einer Präambel und aus den verschlüsselten Daten. Aufgrund aller weiteren Datenpakete werden weitere Schlüsselgerätepakete mit je einem Kopf mit je einer Präambel und mit verschlüsselten Daten übertragen. Nach dem letzten Datenpaket wird ein Verbindungsauslösepaket an das zugeordnete Schlüsselgerät abgegeben, das die Übertragung eines weiteren Kopfes und einer weiteren Präambel veranlaßt. Außerdem veranlaßt das Schlüsselgerät die Übertragung eines Verbindungsauslösepaketes.

Gemäß diesem internen Stand der Technik wird das sendeseitige Schlüsselgerät nach jedem Empfang eines Datenpaketes neu eingephast und anschließend ausgephast. Das empfangsseitige Schlüsselgerät wird vor Empfang jedes Schlüsselgerätepaketes neu eingephast und anschließend nach der Entschlüsselung wieder ausgephast. Je größer die Anzahl der zu übertragenden Schlüsselgerätepakete ist, desto nachteiliger wirken sich die übertragenen Präambeln aus, weil die Zeit, die zur Übertragung mehrerer Schlüsselgerätepakete zur Verfügung steht, begrenzt ist.

Der Erfindung liegt die Aufgabe zugrunde, ein Verfahren zur Synchronisierung von Schlüsselgeräten anzugeben, bei dem die zur Einphasung der Schlüsselgeräte erforderliche Zeit von der Anzahl der zu übertragenden Schlüsselgerätepakete unabhängig ist und die Schlüsselgeräte gegenüber der jeweiligen Datenendeinrichtung und gegenüber der Datenübertragungseinrichtung transparent wirken.

Die Lösung der der Erfindung zugrundeliegenden Aufgabe ist gekennzeichnet durch die folgenden Verfahrensschritte:

A) Das Verbindungsbestätigungspaket wird im Bereich des ersten Schlüsselgerätes der ersten Datenendeinrichtung gespeichert.

B) Nach Empfang des Verbindungsbestätigungspaketes veranlaßt das erste Schlüsselgerät die Absendung eines ersten Schlüsselgerätsynchronisierungspaketes, mit Hilfe dessen die Schlüsselrechner der Schlüsselgeräte synchronisiert werden.

C) Nach Synchronisierung der Schlüsselrechner veranlaßt das erste Schlüsselgerät die Weiterleitung des Verbindungsaufbaupaketes an die erste Datenendeinrichtung.

Bei der Erfindung ist die zur Einphasung der Schlüsselgeräte erforderliche Zeit unabhängig von der Anzahl der zu übertragenden Datenpakete, weil die Einphasung — nach erfolgtem Verbindungsaufbau — nur ein einziges Mal vorgenommen wird.

Um die Einphasung von einem der beiden Schlüsselgeräte aus in die Wege zu leiten, ist es zweckmäßig, daß das erste Schlüsselgerät ein erstes Schlüsselgerätsynchronisierpaket an das zweite Schlüsselgerät der zweiten Datenendeinrichtung sendet und damit die Synchronisierung des Sendeteils des ersten Schlüsselgeräts mit dem Empfangsteil des zweiten Schlüsselgerätes bewirkt, und daß das zweite Schlüsselgerät der zweiten Datenendeinrichtung ein zweites Schlüsselgerätsynchronisierpaket an das erste Schlüsselgerät sendet und damit die Synchronisierung des Sendeteils des zweiten Schlüsselgerätes mit dem Empfangsteil des ersten Schlüsselgerätes bewirkt (Anspruch 3).

Im folgenden werden Ausführungsbeispiele der Erfindung anhand der Figuren 1 bis 5 beschrieben, wobei in mehreren Figuren dargestellte gleiche Gegenstände mit gleichen Bezugszeichen bezeichnet sind.

Es zeigt

Fig. 1 ein Blockschaltbild eines Datenübertragungssystems,

Fig. 2 eine schematische Darstellung eines bekannten Synchronisierverfahrens,

Fig. 3 eine schematische Darstellung des vorgeschlagenen Synchronisierverfahrens,

Fig. 4 ein Ausführungsbeispiel eines Schlüsselgerätes einer ersten Station,

Fig. 5 ein Ausführungsbeispiel eines Schlüsselgerätes einer zweiten Station.

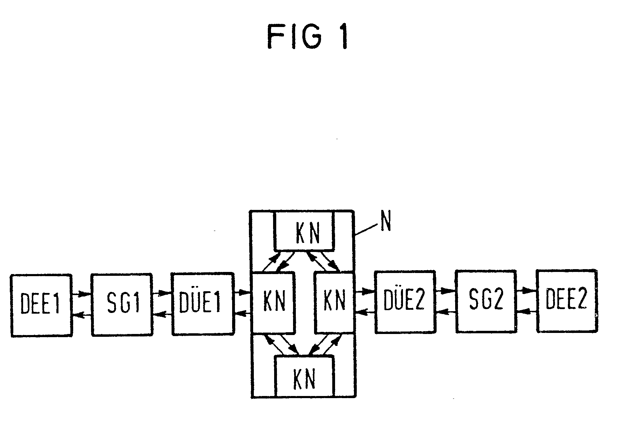

Fig. 1 zeigt ein Blockschaltbild eines Datenübertragungssystems zur Übertragung verschlüsselter Daten. Es kann sich um ein Vollduplexsystem oder um ein Halbduplexsystem handeln. Die Datenendeinrichtung DEE1 gibt unverschlüsselte Daten an das Schlüsselgerät SG1 ab. Die dort verschlüsselten Daten gelangen über die Datenübertragungseinrichtung DÜE1 zum Paketnetz N, das mehrere Netzknoten KN enthält. Die verschlüsselten Daten werden innerhalb des Paketnetzes vom einen Knoten zum anderen Knoten übertragen und gelangen über die Datenübertragungseinrichtung DÜE2 zum Schlüsselgerät SG2. Dort werden die Daten entschlüsselt und die entschlüsselten Daten werden der Datenendeinrichtung DEE2 zugeleitet.

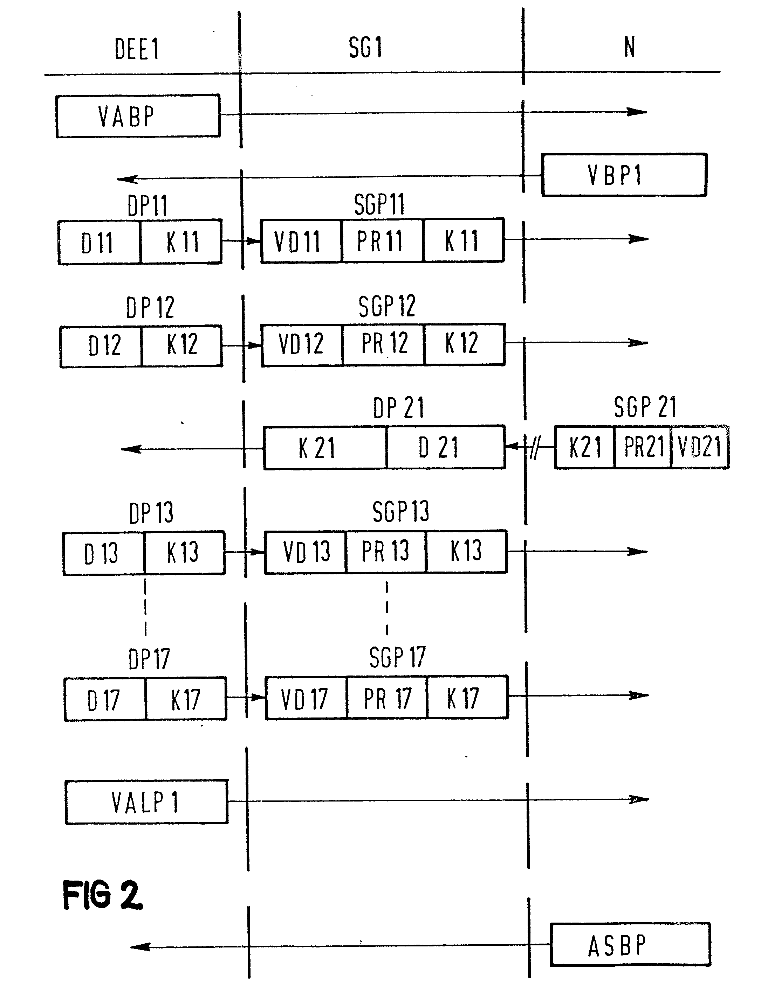

Fig. 2 zeigt ein Schema, das in drei Kolonnen gegliedert ist. Die erste Kolonne bezieht sich auf die Datenendeinrichtung DEE1, die zweite Kolonne auf das zugeordnete Schlüsselgerät SG1 und die dritte Kolonne bezieht sich auf das Paketnetz N. Anhand dieses Schemas wird ein bekanntes Synchronisierverfahren beschrieben. Zur Herstellung des Verbindungsaufbaues wird von der Datenendeinrichtung DEE1 ein Verbindungsaufbaupaket VABP abgegeben, und im Bereich des Paketnetzes N empfangen. Mit dem Verbindungsbestätigungspaket VBP1 wird der Empfang des Verbindungsaufbaupaketes VABP bestätigt. Die Datenendeinrichtung DEE1 beginnt dann mit der Abgabe der Datenpakete. Zunächst wird das Datenpaket DP11 mit dem Kopf K11 und den Daten D11 abgegeben. Das Schlüsselgerät SG1 übernimmt den Kopf K11, erzeugt die Präambel PR11, verschlüsselt die Daten und veranlaßt die Übertragung des Schlüsselgerätepaketes SGP11, bestehend aus dem Kopf K11, der Präambel PR11 und aus den verschlüsselten Daten VD11. Anschließend an das Datenpaket DP11 gibt die Datenendeinrichtung DEE1 das Datenpaket DP12 ab, mit dem Kopf K12 und den Daten D12. Das Schlüsselgerät SG1 veranlaßt die Übertragung des Schlüsselgerätepaketes SGP12 mit dem Kopf K12, mit der Präambel PR12 und mit den verschlüsselten Daten VD12.

Zwischen den Datenpaketen der Datenendeinrichtung DEE1 können auch Datenpakete der in Fig. 1 dargestellten Datenendeinrichtung DEE2 übertragen werden. Beispielsweise wird ein Datenpaket der Datenendeinrichtung DEE2 mit einem Kopf und mit Datem einem in Fig. 2 nicht dargestellten Schlüsselgerät zugeführt. Dieses Schlüsselgerät veranlaßt die Übertragung des Schlüsselgerätepaketes SGP21 mit dem Kopf K21, mit der Präambel PR21 und mit den verschlüsselten Daten VD21. Das Schlüsselgerät SG1 entschlüsselt die Daten VD21 und gibt das Datenpaket DP21 mit dem Kopf K11 und den entschlüsselten Daten D21 an die Datenendeinrichtung DEE1 ab.

Es wird nun angenommen, daß die Datenendeinrichtung DEE1 zeitlich nacheinander die weiteren Datenpakete DP13 bis DP17 mit den Köpfen K13 bis K17 und mit den Daten D13 bis D17 an das Schlüsselgerät SG1 abgibt. Das Schlüsselgerät SG1 gibt jeweils Schlüsselgerätepakete SGP13 bis SGP17 mit den Köpfen K13 bis K17, mit den Präambeln PR13 bis PR17 und mit den verschlüsselten Daten VD13 bis VD17 ab.

Nach Übertragung aller Datenpakete gibt die Datenendeinrichtung DEE1 das Verbindungsauslösepaket VALP1 an das Schlüsselgerät SG1 ab, das das Verbindungsauslösepaket VALP1 an das Paketnetz N weitergibt.

Die in Fig. 1 dargestellte Datenendeinrichtung DEE2 bestätigt die Auslösung mit dem Auslösebestätigungspaket ASBP. Damit ist der Verkehr zwischen den beiden Datenendeinrichtungen DEE1 und DEE2 abgeschlossen. Je mehr Datenpakete gesendet werden, desto größer ist die Anzahl der zugeordneten Präambeln PR11 bis PR18 und desto mehr Zeit ist zur Übertragung dieser Präambeln erforderlich.

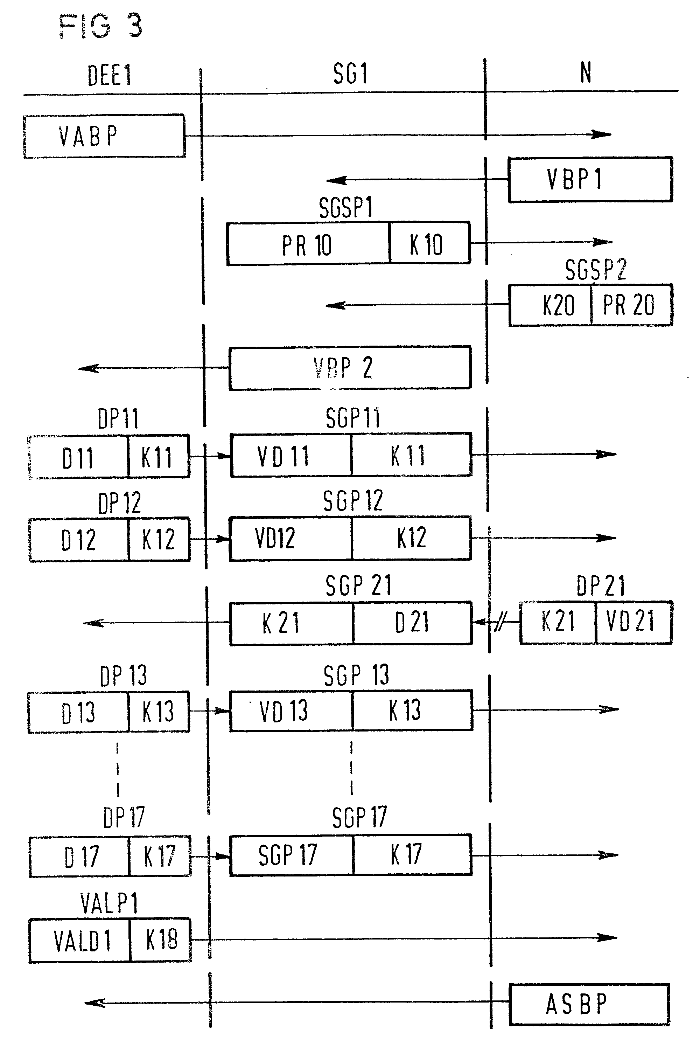

Fig. 3 zeigt ein Verfahren, das sich durch eine rationelle Schlüsselgerätsynchronisierung auszeichnet. Das Verbindungsaufbaupaket VABP wird wie gemäß Fig. 2 dem Paketnetz N zugeführt. Als Antwort darauf wird das Verbindungsbestätigungspaket VBP1 gesendet, das vom Schlüsselgerät SG1 empfangen wird. Das Schlüsselgerät SG1 veranlaßt die Übertragung des Schlüsselgerätsynchronisierpaketes SGSP1, das eine Synchronisierung des Sendeteils des Schlüsselgerätes SG1 mit dem Empfangsteil des Schlüsselgerätes SG2 während der Dauer des gesamten Verbindungsaufbaues bewirkt. Das Schlüsselgerätsynchronisierpaket SGSP1 bewirkt außerdem, daß der Sendeteil des Schlüsselgerätes SG2 das Schlüsselgerätsynchronisierpaket SGSP2 absendet und damit wird der Sendeteil des Schlüsselgerätes SG2 mit dem Empfangsteil des Schlüsselgerätes SG1 synchronisiert. Die Schlüsselgerätsynchronisierpakete SGSP1 und SGSP2 bestehen aus je einem Kopf K10 bzw. K20 und aus je einer Präambel PR10 bzw. PR20. Die Präambeln enthalten je einen Spruchschlüssel, je eine Prüfbitfolge zur Prüfung der Einphasung, je eine Information zur Kennzeichnung der beendeten Einphasung und je ein Sicherungswort.

Das Schlüsselgerät SG1 übermittelt das Verbindungsbestätigungspaket VBP2 an die Datenendeinrichtung DEE1. Die Verbindungsbestätigungspakete VBP1 und UBP2 gleichen einander. Nun beginnen die Datenendeinrichtungen mit der Ausgabe der Datenpakete; insbesondere gibt die Datenendeinrichtung DEE1 die Datenpakete DP11, DP12, DP13 bis DP17 ab. Dazwischen gibt die Datenendeinrichtung DEE2 das Datenpaket DP21 ab. Das Schlüsselgerät SG1 übernimmt die Köpfe K11, K12, K13 bis K17, verschlüsselt die Daten und gibt die Schlüsselgerätpakete SGP11, SGP12, SGP13 bis SGP17 ab. Im Gegensatz zu dem in Fig. 2 dargestellten Verfahren enthalten die Schlüsselgerätpakete SGP11, SGP12, SGP13 bis SGP17 keine Präambeln. Wenn alle Datenpakete abgegeben wurden, dann gibt die Datenendeinrichtung DEE1 das Verbindungsauslösepaket VALP1 mit dem Kopf K18 und mit den Daten VALD1 ab. Das Schlüsselgerät SG1 erkennt dieses Verbindungsauslösepaket, veranlaßt die Ausphasung, bewirkt aber keine Änderung des Verbindungsauslösepaketes. Die in Fig. 1 dargestellte Datenendeinrichtung DEE2 empfängt das Verbindungsauslösepaket VALP1 und bestätigt diesen Empfang mit dem Auslösebestätigungspaket ASBP.

Das beschriebene Verfahren ist umso vorteilhafter, je größer die Anzahl der übertragenen Datenpakete ist, weil bei jedem Datenpaket die Übertragung der gemäß Fig. 2 dargestellten Präambeln eingespart wird.

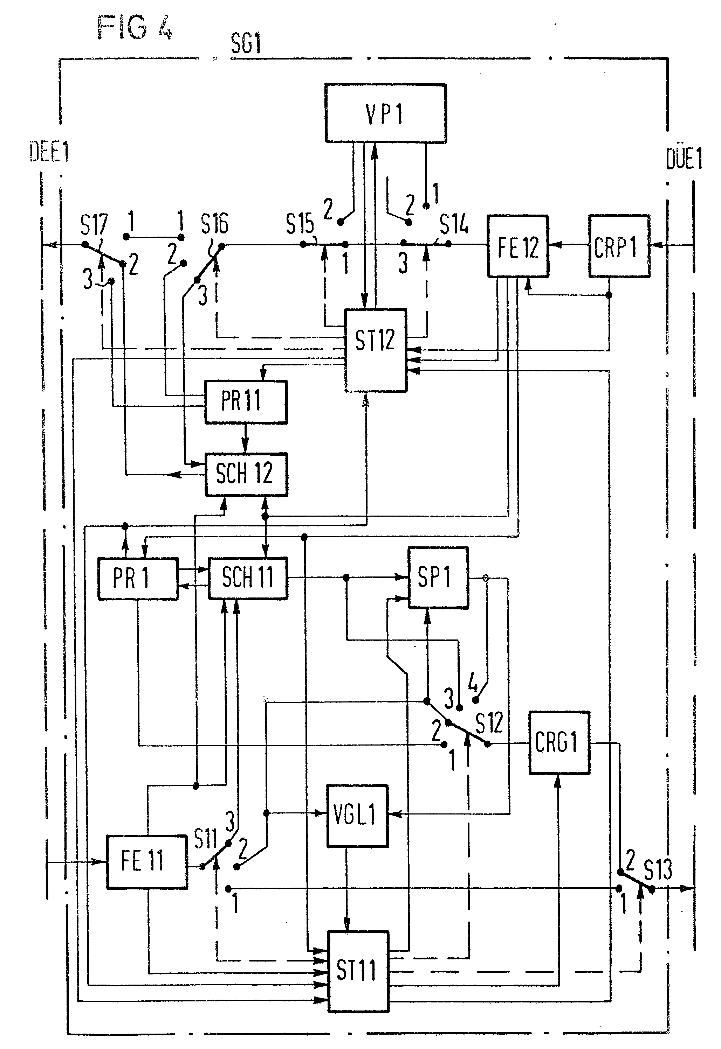

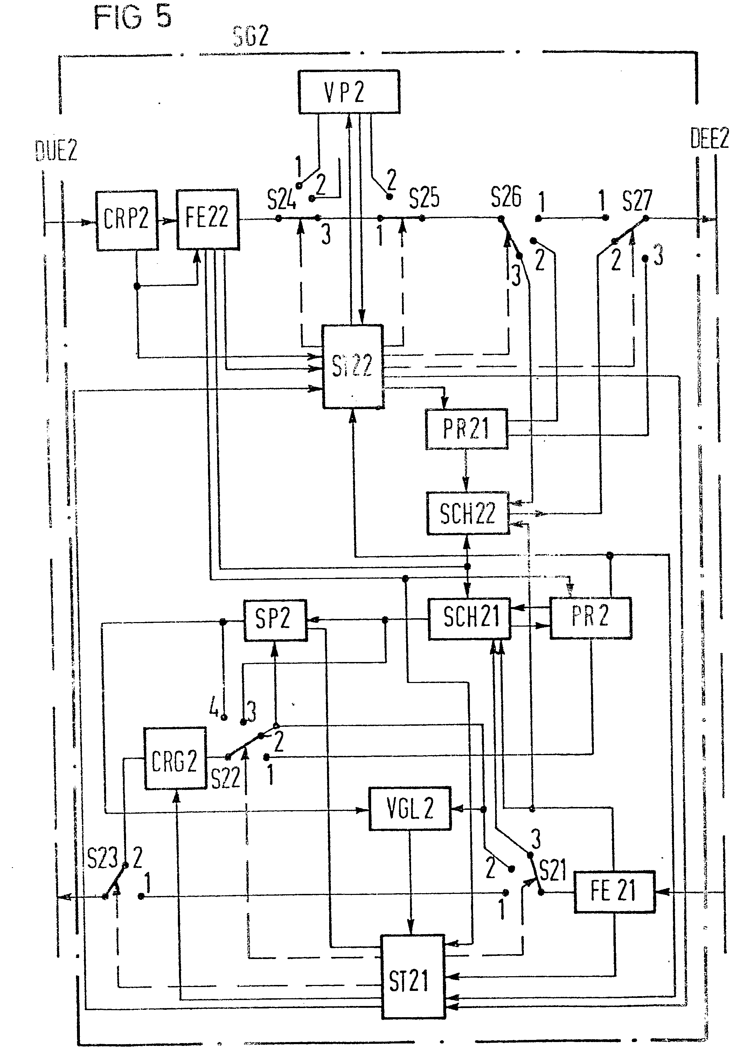

Fig. 4 zeigt ausführlicher das Schlüsselgerät SG1, das, wie die Fig. 1 zeigt, zur Datenendeinrichtung DEE1 gehört. Fig. 5 zeigt das Schlüsselgerät SG2, das zur Datenendeinrichtung DEE2 gehört. Das Schlüsselgerät SG1 ist einerseits an die Datenendeinrichtung DEE1 angeschlossen, und ist andererseits an die Datenübertragungseinrichtung DÜE1 angeschlossen. Das Schlüsselgerät SG2 ist einerseits an die Datenübertragungseinrichtung DÜE2 angeschlossen, und ist andererseits an die Datenendeinrichtung DEE2 angeschlossen. Die Schalter S11, S12, S13, S14, S15, S16, S17 des Schlüsselgerätes SG1 und die entsprechenden Schalter S21, S22, S23, S24, S25, S26, S27 des Schlüsselgerätes SG2, können jeweils mehrere Schalterstellungen einnehmen. Es wird angenommen, daß diese Schalter zunächst die voll dargestellten Schalterstellungen einnehmen. Mit Hilfe der Steuerstufe ST11 werden die Schalter S11, S12, S13 eingestellt. Mit Hilfe der Steuerstufe ST12, werden die Schalter S14, S15, S16 und S17 eingestellt. In ähnlicher Weise werden mit Hilfe der Steuerstufe ST21 des Schlüsselgerätes SG2 die Schalter S21, S22 und S23 eingestellt und mit Hilfe der Steuerstufe ST22 werden die Schalter S24, S25, S26 und S27 eingestellt.

Die in Fig. 4 dargestellten Formaterkennungen FE11, FE12 und die in Fig. 5 dargestellten Formaterkennungen FE21 und FE22, können die Verbindungsaufbaupakete, die Verbindungsbestätigungspakete, die Präambeln, die Köpfe der Datenpakete, die Verbindungsauslösepakete, die Auslösebestätigungspakete und eventuelle Negativquittungen erkennen.

Es wird zunächst eine ungestörte Datenübertragung vorausgesetzt. Es wird also angenommen, daß die Datenendeinrichtung DEE1 das Verbindungsaufbaupaket VABP an das Schlüsselgerät SG1 abgibt. Die Formaterkennung FE11 erkennt dieses Verbindungsaufbaupaket und veranlaßt die Steuerstufe ST11, die Schalterstellungen S11/1 und S13/1 einzustellen. Das Verbindungsaufbaupaket passiert somit das Schlüsselgerät SG1 und wird über den Sicherungswortprüfer CRP2 der Formaterkennung FE22 zugeleitet. Durch den Sicherungswortprüfer CRP2 wird das Verbindungsaufbaupaket nicht geändert. Die Formaterkennung FE22 erkennt ebenfalls das Verbindungsaufbaupaket und veranlaßt mit Hilfe der Steuerstufe ST22 die Schalterstellungen S24/3, S25/1, S26/1 und S27/1. Bei diesen Schalterstellungen wird das Verbindungsaufbaupaket der Datenendeinrichtung DEE2 zugeleitet. Die bis jetzt beschriebene Vorgänge sind schematisch in der obersten Zeile der Fig. 3 dargestellt.

Die Datenendeinrichtung DEE2 sendet das Verbindungsbestätigungspaket VBP1 über das in Fig. 5 dargestellte Schlüsselgerät SG2 zu dem in Fig. 4 dargestellten Schlüsselgerät SG1. Die Formaterkennung FE21 erkennt das Verbindungsbestätigungspaket und veranlaßt mit Hilfe der Steuerstufe ST21 die Schalterstellungen S21/1 und S23/1. Das Verbindungsbestätigungspaket passiert daher das Schlüsselgerät SG2 und erreicht über den Sicherungswortprüfer CRP1 die in Fig. 4 dargestellte Formaterkennung FE12. Diese veranlaßt mit Hilfe der Steuerstufe ST12 die Schalterstellung S14/1. Damit wird das Verbindungsbestätigungspaket im Verbindungspaketspeicher VP1 gespeichert. Dieser Vorgang ist in Fig. 3 in der zweiten Zeile symbolisch dargestellt.

Die Steuerstufe ST12 veranlaßt mit Hilfe der Steuerstufe ST11 die Schalterstellungen S12/1 und S13/2. Bei diesen Schalterstellungen wird das im Präambelgenerator PR1 im Zusammenwirken mit dem Schlüsselrechner SCH11 erzeugte Schlüsselgerätsynchronisierpaket SGSP1 über die Schalter S12, über den Sicherungswortgenerator CRG1 und über den Schalter S13 der Datenübertragungseinrichtung DÜE1 zugeführt. Über die Datenübertragungseinrichtung DÜE2 gelangt das Schlüsselgerätsynchronisierungspaket SGSP1 in die Formaterkennung FE22. Diese veranlaßt mit Hilfe der Steuerstufe ST22 die Schalterstellungen S24/3, S25/1 und S26/3. Auf diese Weise gelangt die Präambel PR10 in den Schlüsselrechner SCH22 und stellt diesen ein. Dieser Vorgang ist in Fig. 3 in der 3. Zelle symbolisch dargestellt.

Die Steuerstufe ST22 meldet an die Steuerstufe ST21 den Empfang einer Präambel. Nun wird mit Hilfe des Präambelgenerators PR2 das Schlüsselgerätsynchronisierpaket SGSP2 erzeugt und dem in Fig. 4 dargestellten Schlüsselrechner SCH12 zugeleitet. Dazu werden mit Hilfe der Steuerstufe ST21 die Schalterstellungen derart eingestellt, daß das Schlüsselgerätsynchronisierpaket SGSP2 über die Schalterstellung S22/1, über den Sicherungswortprüfer CRG2, über die Schalterstellung S23/2, über den Sicherungswortprüfer CRP1, über die Formaterkennung FE12, und über die Schalterstellungen S14/3, S15/1 und S16/3 dem Schlüsselrechner SCH12 zugeleitet wird. Dabei wurden die Schalterstellungen mit Hilfe der Steuerstufe ST12 eingestellt, der vom Präambelgenerator PR1 das Ende der Präambel PR10 gemeldet wurde. Der Schlüsselrechner SCH12 erhält also das Schlüsselgerätsynchronisierpaket SGSP2 und wird somit eingephast. Auf diesen Vorgang bezieht sich die 4. Zeile der Fig. 3. Danach sind beide Schlüsselrechner SCH21 und SCH12 eingephast.

Wenn die Formaterkennung FE12 das Ende des Schlüsselgerätesynchronisierpaketes SGSP2 erkennt, werden mit Hilfe der Steuerstufe ST12 die Schalterstellungen S15/2, S16/1 und S17/1 eingestellt und auf diese Weise wird das Verbindungsbestätigungspaket VBP2 vom Verbindungspaketspeicher VP1 zur Datenendeinrichtung DEE1 übertragen. Auf diesen Vorgang bezieht sich die 5. Zeile in Fig. 3.

Die Datenendeinrichtung DEE1 beginnt nun die in Fig. 3 schematisch dargestellten Datenpakete zu senden. Insbesondere gelangt das Datenpaket DP11 zur Formaterkennung FE11, welche das Datenpaket am Kopf K11 erkennt und mit Hilfe der Steuerstufe ST11 die Schalterstellung S11/2 veranlaßt. Es wird unterstellt, daß jedem Datenpaket eine Nummer zugeordnet ist, und daß im Speicher SP1 möglicherweise bereits früher Datenpakete gespeichert wurden. Unter diesen Voraussetzungen vergleicht der Vergleicher VGL1 die Nummern der im Speicher SP1 gespeicherten Datenpakete mit der Nummer des Datenpaketes DP11. Falls dieser Vergleich negativ ausfällt, wurde das betreffende Datenpaket erstmals gesendet und ist daher noch nicht im Speicher SP1 gespeichert. Der Vergleicher VGL1 veranlaßt daher, mit Hilfe der Steuerstufe ST11 die Schalterstellungen S11/3, S12/3, so daß das Datenpaket DP11 dem Schlüsselrechner SCH11 zugeführt wird. Im Schlüsselrechner werden die Daten D11 des Datenpaketes DP11 verschlüsselt und das entstandene Schlüsselgerätepaket SGP11 wird einerseits im Speicher SP1 gespeichert und wird andererseits über den Schalter S12, über den Sicherungswortgenerator CRG1 und über den Schalter S13 an die Datenübertragungseinrichtung DÜE1 abgegeben. Über die Datenübertragungseinrichtung DÜE2 gelangt das Schlüsselgerätpaket SGP11 in die Formaterkennung FE22, die den Kopf K11 erkennt und mit Hilfe der Steuerstufe ST22 die Schalterstellungen S24/3, S25/1, S26/3, S27/2 veranlaßt. Bei diesen Schalterstellungen werden die Daten mit Hilfe des Schlüsselrechners SCH22 entschlüsselt, und die entschlüsselten Daten werden über den Schalter S27 der Datenendeinrichtung DEE2 zugeleitet. Diese Vorgänge sind in Fig. 3 in der 6. Zeile symbolisch dargestellt.

Die Übertragung der weiteren, in Fig. 3 schematisch dargestellten Datenpakete DP12, DP13 bis DP17, vollzieht sich in gleicher Weise wie eben anhand des Datenpaketes DP11, beschrieben wurde. Die Übertragung des Datenpaketes DP21, geschieht ebenfalls in ähnlicher Weise, weil die in den Fig. 4 und 5 dargestellten Schlüsselgeräte SG1 und SG2 völlig gleichartig aufgebaut sind.

Um die Verbindung aufzulösen, sendet die Datenendeinrichtung DEE1 das Verbindungsauslösepaket VALP1 an die Formaterkennung FE11. Diese erkennt den Kopf des Verbindungsauslösepaketes und veranlaßt einerseits die Ausphasung der Schlüsselrechner SCH11, SCH12 und andererseits die Schalterstellungen S11/1 und S13/1. Das Verbindungsauslösepaket gelangt damit über die Datenübertragungseinrichtungen in die Formaterkennung FE22, die einerseits die Ausphasung der Schlüsselrechner SCH21, SCH22, veranlaßt, und die andererseits mit Hilfe der Steuerstufe ST22 die Schalterstellungen S24/3, S25/1, S26/1, S27/1 veranlaßt. Bei diesen Schalterstellungen gelangt das Verbindungsauslösepaket VALP1 zur Datenendeinrichtung DEE2. Auf diesen Vorgang bezieht sich die vorletzte Zeile in Fig. 3.

Die Datenendeinrichtung DEE2 gibt das Auslösebestätigungspaket ASBP ab, dessen Kopf die Formaterkennung FE21 erkennt und die Schalterstellungen S21/1 und S23/1 veranlaßt. Bei diesen Schalterstellungen gelangt das Auslösebestätigungspaket in die Formaterkennung FE12, die mit Hilfe der Steuerstufe ST12 die Schalterstellungen S14/3, S15/1, S16/1, S17/1 veranlaßt. Bei diesen Schalterstellungen gelangt das Auslösebestätigungspaket ASBP in die Datenendeinrichtung DEE1. Damit wurde auch die letzte Zeile der Fig. 3 anhand der Fig. 4 und 5 erläutert.

Bei der Datenübertragung können einzelne oder mehrere Bits gestört übertragen werden. Beispielsweise ist der Fall denkbar, daß ein Verbindungsaufbaupaket VABP der in Fig. 1 dargestellten Datenendeinrichtung DEE1 mit ungestörtem Kopf über das Schlüsselgerät SG1 und über die Datenübertragungseinrichtung DÜE1 einem Knoten KN zugeführt wird, und daß dieser Knoten am gestörten Sicherungswort ein teilweise gestörtes Verbindungsaufbaupaket erkennt. Unter dieser Voraussetzung sendet der Knoten eine Negativquittung über die Datenübertragungseinrichtung DÜE1 zum Schlüsselgerät SG1, wo die Formaterkennung FE12 die Negativquittung erkennt und die Schalterstellungen S14/3, S15/1, S16/1, S17/1 veranlaßt. Bei diesen Schalterstellungen gelangt die Negativquittung zur Datenendeinrichtung DEE1, die daraufhin das Verbindungsaufbaupaket wiederholt.

Es ist außerdem denkbar, daß das von der Datenendeinrichtung DEE1 abgegebene Verbindungsaufbaupaket einen gestörten Kopf aufweist. Die in Fig. 4 dargestellte Formaterkennung FE11 veranlaßt in diesem Fall keine Weiterleitung des Verbindungsaufbaupaketes zur Datenendeinrichtung DEE2, weil sie das Verbindungsaufbaupaket nicht als solches erkennt. In diesem Fall muß von der Datenendeinrichtung DEE1 nach Ablauf einer Kontrollzeit ein weiteres Verbindungsaufbaupaket abgegeben werden.

Es ist ferner denkbar, daß das Schlüsselgerät-Synchronisierpaket SGSP1, das mit Hilfe des in Fig. 4 dargestellten Präambelgenerators PR1 erzeugt wird, mindestens teilweise gestört ist. Wenn beispielsweise nur der Kopf K10 dieses Paketes SGSP1 gestört ist, dann ist von den Knoten KN des Paketnetzes N keine Reaktion zu erwarten. In der in Fig. 4 dargestellten Steuerstufe ST11, wird jedoch der Zeitpunkt festgehalten, zu dem das Paket SGSP1 abgesendet wird. Falls nach Ablauf einer vorgegebenen Dauer keine Quittung bei der Steuerstufe einlangt, dann wird erneut ein Schlüsselgerätsynchronisierpaket SGSP1 abgegeben.

Es ist auch der Fall denkbar, daß das Sicherungswort des Schlüsselgerätsynchronisierpaketes SGSP1 gestört ist, wogegen der Kopf K10 als nicht gestört angenommen wird. Wenn ein derartiges Paket SGSP1 von dem in Fig. 4 dargestellten Schlüsselgerät SG1 abgegeben und übertragen wird, dann erkennt der in Fig. 5 dargestellte Sicherungswortprüfer CRP2 das gestörte Sicherungswort und veranlaßt mit Hilfe der Steuerstufe ST22 die Schalterstellung S24/2. Damit wird die Weiterleitung des Schlüsselgerätsynchronisierpaketes SGSP1 verhindert. Nach Ablauf einer Kontrollzeit wiederholt die Datenendeinrichtung DEE1 das Verbindungsaufbaupaket VABP. Es ist auch möglich, daß der Sicherungsprüfer CRP2 nach Erkennung des gestörten Sicherungswortes mit Hilfe der Steuerstufe ST22 die Absendung einer Präambel an die zweite Datenendeinrichtung DEE2 veranlaßt, und daß diese zweite Datenendeinrichtung DEE2 mit Hilfe der Präambel die gestörten Daten erkennt und eine Negativquittung aussendet, welche eine wiederholte Absendung des Schlüsselgerätsynchronisierpaketes veranlaßt.

Die von der in Fig. 1 dargestellten Datenendeinrichtung DEE1 abgegebenen Datenpakete enthalten ein Sicherungswort und werden einem der Knoten KN des Paketnetzes N zugeleitet. Falls das Sicherungswort gestört ist, dann erkennt der Knoten dieses mindestens teilweise gestörte Datenpaket und antwortet mit einer Negativquittung. Die Datenendeinrichtung DEE1 erkennt diese Negativquittung und wiederholt das Datenpaket. In diesem Zusammenhang wurde bereits beschrieben, daß die in Fig. 4 dargestellte Formaterkennung FE11 den Kopf eines derartigen Datenpaketes erkennt, und daß sie mit Hilfe der Steuerstufe ST11 die Schalterstellung S11/2 veranlaßt. Es wurde auch bereits dargelegt, daß der Vergleicher VGL1 die Nummern der im Speicher SP1 gespeicherten Datenpakete mit der Nummer des nunmehr gesendeten Datenpaketes vergleicht, und daß bei verschiedenen Nummern die Daten des Datenpaketes mit Hilfe des Schlüsselrechners SCH11 verschlüsselt und in weiterer Folge zu dem in Fig. 5 dargestellten Schlüsselgerät SG2 übertragen werden. Falls unter diesen Voraussetzungen der Vergleicher VGL1 die Gleichheit der Nummern feststellt, dann veranlaßt er mit Hilfe der Steuerstufe ST11 die Schalterstellung S12/4. In diesem Fall handelt es sich also um ein wiederholtes Datenpaket, das in teilweise verschlüsselter Form bereits im Speicher SP1 gespeichert ist, und das von diesem Speicher über den Schalter S12, über den Sicherungswortgenerator CRG1 und über den Schalter S13 an das Schlüsselgerät SG2 weitergeleitet wird.

Schließlich ist auch noch der Fall denkbar, daß das Sicherungswort des Verbindungsbestätigungspaketes VBP1 der Datenendeinrichtung DEE2 gestört ist. Der in Fig. 4 dargestellte Sicherungswortprüfer CRP1 erkennt das gestörte Sicherungswort und veranlaßt mit Hilfe der Steuerstufe ST12 die Schalterstellungen S14/3, S15/1, S16/1 und S17/1. Das teilweise gestörte Verbindungsbestätigungspaket wird also in diesem Fall nicht im Verbindungspaketspeicher VP1 gespeichert, sondern wird in gestörter Form der Datenendeinrichtung DEE1 zugeleitet. Diese Datenendeinrichtung DEE1 erkennt das gestörte Sicherungswort und veranlaßt eine Wiederholung des Verbindungsbestätigungspaketes.

## Patentansprüche

1. Verfahren zur Synchronisierung von Schlüsselgeräten, die im Rahmen eines Paketnetzes betrieben werden, wonach zum Aufbau einer Verbindung zwischen einer ersten und einer zweiten Datenendeinrichtung (DEE1) ein Verbindungsaufbaupaket (VABP) von der ersten (DEE1) zur zweiten (DEE2) Datenendeinrichtung übertragen wird, wonach die zweite Datenendeinrichtung (DEE2) ein Verbindungsbestätigungspaket (VBP1) abgibt und wonach sich die Datenendeinrichtungen Datenpakete (DP11–DP17, DP21) zusenden, gekennzeichnet durch die folgenden Verfahrensschritte:

A) Das Verbindungsbestätigungspaket (VBP1) wird im Bereich des ersten Schlüsselgerätes (SG1) der ersten Datenendeinrichtung (DEE1) gespeichert.

B) Nach Empfang des Verbindungsbestätigungspaketes veranlaßt das erste Schlüsselgerät (SG1) die Absendung eines ersten Schlüsselgerätsynchronisierungspaketes (SGSP1) an das zweite Schlüsselgerät (SG2), mit Hilfe dessen die Schlüsselrechner der Schlüsselgeräte synchronisiert werden.

C) Nach Synchronisierung der Schlüsselrechner veranlaßt das erste Schlüsselgerät (SG1) die Weiterleitung (VBP2) des Verbindungsbestätigungspaketes (VBP1) an die erste Datenendeinrichtung (DEE1) (Fig. 3).

2. Verfahren nach Anspruch 2, dadurch gekennzeichnet, daß das erste Schlüsselgerätsynchronisierpaket (SGSP1) aus einem Kopf (K10) und aus einer Präambel (PR10) gebildet wird, die einen Spruchschlüssel, eine Prüfbitfolge zur Prüfung der Einphasung und eine Information zur Kennzeichnung der beendeten Einphasung enthält.

3. Verfahren nach Anspruch 1, dadurch gekennzeichnet, daß mit dem ersten Schlüsselgerätsynchronisierpaket (SGSP1) die Synchronisierung des Sendeteils des ersten Schlüsselgerätes (SG1) mit dem Empfangsteil des zweiten Schlüsselgerätes (SG2) bewirkt wird, und daß das zweite Schlüsselgerät (SG2) der zweiten Datenendeinrichtung (DEE2) ein zweites Schlüsselgerätsynchronisierungspaket (SGSP2) an das erste Schlüsselgerät (SG1) sendet und damit die Synchronisierung des Sendeteils des zweiten Schlüsselgerätes (SG2) mit dem Empfangsteil des ersten Schlüsselgerätes (SG1) bewirkt.

4. Verfahren nach Anspruch 3, dadurch gekennzeichnet, daß das erste Schlüsselgerät (SG1) nach Empfang des zweiten Schlüsselgerätesynchronisierpaketes (SGSP2) das Verbindungsbestätigungspaket an die erste Datenendeinrichtung (DEE1) abgibt (Fig. 4 und 5).

5. Verfahren nach einem der Ansprüche 1 bis 3,

dadurch gekennzeichnet, daß der Zeitpunkt der Absendung des ersten Schlüsselgerätsynchronisierpaketes (SGSP1) an das zweite Schlüsselgerät (SG2) im ersten Schlüsselgerät (SG1) gespeichert wird, daß das zweite Schlüsselgerät (SG2) den Empfang des ersten Schlüsselgerätsynchronisierpaketes (SGSP1) mit einer Quittung bestätigt und daß bei Ausbleiben der Quittung – innerhalb einer vorgegebenen Dauer nach dem Zeitpunkt – erneut ein Schlüsselgerätsynchronisierpaket (SGSP) abgegeben wird (Fig. 4 und 5).

6. Verfahren nach Anspruch 1, dadurch gekennzeichnet, daß das Schlüsselgerätsynchronisierpaket (SGSP1) ein Sicherungswort enthält, mit Hilfe dessen gestörte Sicherungsworte erkennbar sind, und daß bei gestörtem Sicherungswort die Weiterleitung des ersten Schlüsselgerätsynchronisierpaketes (SGSP1) an die zweite Datenendeinrichtung (DEE2) verhindert wird.

7. Verfahren nach Anspruch 6, dadurch gekennzeichnet, daß bei gestörtem Sicherungswort im zweiten Schlüsselgerät (SG2) der zweiten Datenendeinrichtung (DEE2) die Absendung einer Präambel (PR) an diese zweite Datenendeinrichtung (DEE2) veranlaßt wird, und daß diese zweite Datenendeinrichtung (DEE2) mit Hilfe der Präambel die gestörten Daten erkennt und eine Negativquittung aussendet, welche eine wiederholte Absendung des Schlüsselgerätsynchronisierpaketes (SGSP1) veranlaßt (Fig. 4 und 5).

8. Verfahren nach Anspruch 1, dadurch gekennzeichnet, daß das Verbindungsbestätigungspaket (VBP1) ein Sicherungswort enthält, daß bei gestörtem Sicherungswort das empfangende Schlüsselgerät (SG1) noch vor Absendung eines ersten Schlüsselgerätsynchronisierpaketes (SGSP1) die Weiterleitung des gestörten Verbindungsbestätigungspaketes (VBP1) an die empfangende Datenendeinrichtung (DEE1) veranlaßt und daß diese empfangende Datenendeinrichtung (DEE1) eine Wiederholung des Verbindungsaufbaupaketes bewirkt.

**Claims**

1. Method for synchronising cipher machines which are operated within a packet-switched network, in accordance with which, in order to establish a connection between a first and a second data terminal device (DEE1), a connection establishement packet (VABP) is transferred from the first (DEE1) to the second (DEE2) data terminal device, whereupon the second data terminal device (DEE2) emits a connection confirmation packet (VBP1) and whereupon the data terminal devices transmit data packets (DP11, DP17, DP21) to one another, characterised by the following method steps:

A) The connection confirmation packet (VB1) is stored in the region of the first cipher machine (SG1) of the first data terminal device (DEE1).

B) Following the reception of the connection confirmation packet, the first cipher machine (SG1) causes a first cipher machine synchronisation packet (SGSP1) to be transmitted to the second cipher machine (SG2), with the assistance of which packet the cipher computers of the cipher machines are synchronised.

C) Following the synchronisation of the cipher computers, the first cipher machine (SG1) causes the connection confirmation packet (VBP1) to be forwarded (VBP2) to the first data terminal device (DEE1) (Fig. 3).

2. Method as claimed in claim 1, characterised in that the first cipher machine synchronisation packet (SGSP1) consists of a heading (K10) and a preamble (PR10) which contains a test bit sequence for testing the phasing and an item of information characterising that phasing has been concluded.

3. Method as claimed in claim 1, characterised in that the first cipher machine synchronisation packet (SGSP1) causes the transmitting section of the first cipher machine (SG1) to be synchronised to be receiving section of the second cipher machine (SG2), and that the second cipher machine (SG2) of the second data terminal device (DEE2) transmits a second cipher machine synchronisation packet (SGSP2) to the first cipher machine (SG1) and thus causes the transmitting section of the second cipher machine (SG2) to be synchronised to the receiving section of the first cipher machine (SG1).

4. Method as claimed in claim 3, characterised in that following the reception of the second cipher machine synchronisation packet (SGSP2), the first cipher machine (SG1) emits the connection confirmation packet to the first data terminal device (DEE1) (Fig. 4 and 5).

5. Method as claimed in one of the claims 1 to 3, characterised in that the time at which the first cipher machine synchronisation packet (SGSP1) is transmitted to the second cipher machine (SG2) is stored in the first cipher machine (SG1), that the second cipher machine (SG2) confirms the reception of the first cipher machine synchronisation packet (SGSP1) by means of an acknowledgement, and that when the acknowledgement fails to appear within a predetermined period following the time, a further cipher machine synchronisation packet (SGSP) is emitted (Figs. 4 and 5).

6. Method as claimed in claim 1, characterised in that the cipher machine synchronisation packet (SGSP1) includes a security word with the assistance of which disturbed security words can be recognised, and that when a security word is disturbed the first cipher machine synchronisation packet (SGSP1) is prevented from being forwarded to the second data terminal device (DEE2).

7. Method as claimed in claim 6, characterised in that in the event of a disturbance of the security word in the second cipher machine (SG2) of the second data terminal device (DEE2), a preamble (PR) is caused to be transmitted to this second data terminal device (DEE2), and that with the assistance of the preamble this second data terminal device (DEE2) recognises the disturbed items of data and transmits a negative acknowledgement which causes the cipher machine synchronisation packet (SGSP1) to be retransmitted (Figs. 4 and 5).

8. Method as claimed in claim 1, characterised in that the connection confirmation packet (VBP1) includes a security word, that in the event of a disturbed security word the receiving cipher machine (SG1) causes the disturbed connection confirmation packet (VBP1) to be forwarded to the receiving data terminal device (DEE1) before the emission of a first cipher machine synchronisation packet (SGSP1), and that this receiving data terminal device (DEE1) causes the connection establishment packet to be repeated.

## Revendications

1. Procédé de synchronisation d'appareils de codage qui fonctionnent dans le cadre d'un réseau à commutation par paquets, selon lequel, pour l'établissement d'une liaison entre un premier dispositif terminal de données (DEE1) et un second dispositif terminal de données (DEE2), un paquet (VABP) d'établissement d'une liaison est transmis par le premier dispositif (DEE1) au second dispositif terminal de données (DEE2), et selon lequel le second dispositif terminal de données (DEE2) délivre un paquet (VBP1) de confirmation de la liaison et selon lequel les dispositifs terminaux de données s'adressent des paquets de données (DP11—DP17, DP21), caractérisé par les phases opératoires suivantes:

A) le paquet (VBP1) de confirmation de la liaison est mémorisé dans la zone du premier appareil de codage (SG1) du premier dispositif terminal de données (DEE1);

B) après réception du paquet de confirmation de la liaison, le premier appareil de codage (SG1) provoque l'envoi d'un premier paquet (SGHP1) de synchronisation de l'appareil de codage au second appareil de codage (SG2), à l'aide duquel les calculateurs de code des appareils de codage sont synchronisés;

C) après synchronisation des calculateurs de code, le premier appareil de codage (SG1) déclenche la retransmission (VBP2) du paquet (VBP1) de confirmation de la liaison au premier dispositif terminal de données (DEE1) (figure 3).

2. Procédé suivant la revendication 1, caractérisé par le fait que le premier paquet (SGSP1) de synchronisation de l'appareil de codage est formé par une en-tête (K10) et par un préambule (PR10), qui contient un code de communication, une suite de bits de contrôle pour le contrôle de la mise en phase et une information pour caractériser l'achèvement de la mise en phase.

3. Procédé suivant la revendication 1, caractérisé par le fait que la synchronisation de la partie émission du premier appareil de codage (SG1) sur la partie réception du second appareil de codage (SG2) 4. Procédé suivant la revendication 3, caractérisé par le fait que le premier appareil de codage (SG1) délivre, après réxeption du second paquet (SGSP2) de synchronisation de l'appareil de codage, le paquet de confirmation de la liaison au premier dispositif terminal de données (DEE1) (figures 4 et 5).

5. Procédé suivant l'uner des revendications 1 à 3, caractérisé par le fait que l'instant de l'envoi du premier paquet (SGSP1) de synchronisation de l'appareil de codage au second appareil de codage (SG2) est mémorisé dans le premier appareil de codage (SG1), que le second appareil de codage (SG2) confirme la réception du premier paquet (SP1) de synchronisation de l'appareil de codage et que dans le cas de l'absence de l'accusé de réception — dans un intervalle de temps donnés après cet instant — un paquet (SGSP) de synchronisation de l'appareil de codage est à nouveau délivré (figures 4 et 5).

6. Procédé suivant la revendication 1, caractérisé par le fait que le paquet (SGSP1) de synchronisation de l'appareil de codage contient un mot de sécurité, à l'aide duquel des mots de sécurité pertubés peuvent être identifiés, et que dans le cas d'un mot de sécurité pertubé, la retransmission du premier paquet (SGSP1) de synchronisation de l'appareil de codage au second dispositif terminal de données (DEE2) est empêchée.

7. Procédé suivant la revendication 6, caractérisé par le fait que dans le cas d'un mot de sécurité pertubé dans le second appareil de codage (SG2) du second dispositif terminal de données (DEE2), l'envoi d'un préambule (PR) à ce second dispositif terminal de données (DEE2) est déclenché et que ce second dispositif terminal de données (DEE2) identifie les données pertubées à l'aide du préambule et envoie un accusé de réception négatif qui déclenche un envoi répété du paquet (SGSP1) de synchronisation de l'appareil de codage (figures 4 et 5).

8. Procédé suivant la revendication 1, caractérisé par le fait que le paquet (VBP1) de confirmation de la liaison contient un mot de sécurité, que dans le cas où le mot de sécurité est perturbé, l'appareil de codage récepteur (SG1) déclenche, avant même l'émission d'un premier paquet (SGSP1) de synchronisation de l'appareil de codage, la retransmission du paquet (VPP1) de confirmation de la liaison perturbée, au dispositif terminal de la liaison perturbée, au dispositif terminal de données récepteur (DEE1) et que ce dispositif terminal de données récepteur (DEE1) réalisé une répétition du paquet d'établissement d'une liaison.

# FIG 1

| DEE1 | SG1 | N |
|---|---|---|

VABP →

VBP1

DP11 — D 11 | K 11 → SGP11 — VD 11 | PR 11 | K 11 →

DP 12 — D 12 | K 12 → SGP 12 — VD 12 | PR 12 | K 12 →

← DP 21 — K 21 | D 21 — SGP 21 — K 21 | PR 21 | VD 21

DP 13 — D 13 | K 13 → SGP 13 — VD 13 | PR 13 | K 13 →

DP 17 — D 17 | K 17 → SGP 17 — VD 17 | PR 17 | K 17 →

VALP 1 →

## FIG 2

← ASBP

# FIG 3

| DEE1 | SG1 | N |
|---|---|---|

VABP ──────────────────────────→

←────────────── VBP1

SGSP1

| PR 10 | K 10 | ──────→

SGSP2

←────────────── | K20 | PR 20 |

←────────── VBP 2

DP11        SGP11

| D11 | K11 | ─→ | VD 11 | K 11 | ──────────→

DP12        SGP12

| D 12 | K 12 | ─→ | VD12 | K12 | ──────────→

SGP 21        DP 21

←────── | K 21 | D 21 | ←//── | K 21 | VD 21 |

DP 13        SGP 13

| D 13 | K 13 | ─→ | VD 13 | K 13 | ──────────→

DP 17        SGP 17

| D 17 | K 17 | ─→ | SGP 17 | K 17 | ──────→

VALP1

| VALD1 | K18 | ──────────────────→

←────────────── ASBP

FIG 4

# FIG 5